(19) **Europäisches Patentamt**

**European Patent Office**

**Office européen des brevets**

(11) **EP 1 094 085 B1**

(12) **EUROPEAN PATENT SPECIFICATION**

(45) Date of publication and mention
of the grant of the patent:
**12.01.2005 Bulletin 2005/02**

(51) Int Cl.⁷: $C08F\ 246/00$, C09K 19/38, C08G 63/60

(21) Application number: **00309190.7**

(22) Date of filing: **18.10.2000**

(54) **Method for producing liquid crystalline polymer**

Verfahren zur Herstellung von flüssigkristallinen Polymeren

Procédé de préparation de cristaux liquides polymères

(84) Designated Contracting States:
**DE FI FR GB NL**

(30) Priority: **18.10.1999 JP 29603399**

(43) Date of publication of application:
**25.04.2001 Bulletin 2001/17**

(73) Proprietor: **POLYPLASTICS CO. LTD.**
**Chuo-Ku Osaka-shi Osaka 541 (JP)**

(72) Inventor: **Yokota, Toshiaki**
**Fuji-shi, Shizuoka 416-8533 (JP)**

(74) Representative: **Jackson, Peter**
**Barker Brettell**
**10-12 Priests Bridge**
**London SW15 5JE (GB)**

(56) References cited:
**WO-A-93/00382**　　　　**WO-A-97/34964**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

Field of the Invention

The present invention relates to a method for producing a thermotropic liquid crystalline polymer of high quality at high production yield.

Background Art

Thermotropic liquid crystalline polymers are expensive, since the polymers are produced from expensive aromatic monomers. Thus, reduction of the high production costs thereof is a big issue. In order to reduce costs, elevating the production yield of the polymers is considered to be one solution.

In order to increase the yield of such polymers, a technique is proposed in which the temperature of a reactor is elevated during discharging of the produced polymer after polymerization is completed, thereby lowering the melt viscosity of the polymer. However, in the technique, the polymer is discolored due to heat deterioration, forming a black-brown polymer. In addition, more severe heat deterioration produces gases of low boiling components such as phenol (PhOH), benzoic acid (BA), hydroxybenzoic acid (HBA), and a phenol ester thereof (HBA-Ph) and black specks (carbonized matter, abbreviated as BS), thereby affecting the quality of the produced polymer. Furthermore, when the reactor is filled with the low-boiling gases, discharge of the product from the reactor is unstable, resulting in decrease in the recovery ratio.

In view of the foregoing, an object of the present invention is to provide a method for producing a high-quality thermotropic liquid crystalline polymer at high yield including the recovery ratio of the polymer from a reactor, which method prevents evolution of low-boiling gases and discoloration due to heat deterioration.

SUMMARY OF THE INVENTION

In order to solve the aforementioned problems, the present inventor has conducted extensive studies, and have found that when the proportions among the amounts of starting monomers, the amount of an acylating agent, and the amount of a catalyst are maintained to specific conditions, then the evolution of low-boiling gases is suppressed and discharge of a high-quality polymer without discoloration due to heat deterioration from a reactor at a high recovery ratio can be achieved. The present invention has been accomplished on the basis of this finding.

Accordingly, the present invention provides a method for producing a thermotropic liquid crystalline polymer, which method comprises polymerizing starting monomers in the presence of an acylating agent,

said starting monomers comprising a carboxyl group-containing compound, a hydroxyl group-containing compound, an amino group-containing compound, an ester derivative thereof, and/or an amide derivative thereof, which are selected from the group consisting of compounds represented by the following components I, II, III, and IV:

(I) an aromatic hydroxycarboxylic acid and an ester derivative thereof;
(II) an aromatic dicarboxylic acid and an alicyclic dicarboxylic acid;
(III) an aromatic diol, an alicyclic diol, an aliphatic diol, and an ester derivative thereof; and
(IV) an aromatic hydroxyamine, an aromatic diamine, an ester derivative thereof, and an amide derivative thereof,

wherein the starting monomers, the acylating agent, and a catalyst are charged so as to satisfy the following equations (1) to (4):

$$0.0015 \leq ((A) - (B))/((A) + (B)) \leq 0.006 \qquad (1);$$

$$1.01 \leq (D)/(C) \leq 1.08 \qquad (2);$$

$$0 \leq (E) \leq 40 \qquad (3);$$

and

$$(D)/(C) \geq -0.002^{\times}(E) + 1.04 \qquad\qquad (4),$$

wherein

(A) denotes the total amount by equivalent (with respect to a carboxyl group) of starting monomers I and/or II;
(B) denotes the total amount by equivalent (with respect to a hydroxyl group, an amino group, an ester derivative group thereof, and an amide derivative group thereof) of starting monomers I, III, and/or IV;
(C) denotes the total amount by equivalent (with respect to a hydroxyl group and an amino group) of starting monomers I, III, and/or IV;
(D) denotes the amount by equivalent of an acylating agent; and
(E) denotes the amount of a catalyst (as reduced to amount by weight of metal, unit: ppm).

Preferably, in the method for producing a thermotropic liquid crystalline polymer, all of the starting monomers I, II, III, and IV are aromatic compounds.

Preferably, in the method for producing a thermotropic liquid crystalline polymer, all of the starting monomers, the acylating agent, and the catalyst are charged into the same reactor, and the resultant mixture is caused to react.

Preferably, in the method for producing a thermotropic liquid crystalline polymer, hydroxyl groups and/or amino groups of the starting monomers I, III, and/or IV are acylated by the acylating agent, and subsequently, the acylated product is caused to react with the starting monomer II.

DETAILED DESCRIPTION OF PREFERRED EMBODIMENTS

The thermotropic liquid crystalline polymer of the present invention is produced from starting monomers comprising a carboxyl group-containing compound, a hydroxyl group-containing compound, an amino group-containing compound, an ester derivative thereof, and/or an amide derivative thereof, which are selected from the group consisting of compounds represented by the following components I, II, III, and IV:

(I) an aromatic hydroxycarboxylic acid and an ester derivative thereof;
(II) an aromatic dicarboxylic acid and an alicyclic dicarboxylic acid;
(III) an aromatic diol, an alicyclic diol, an aliphatic diol, and an ester derivative thereof; and
(IV) an aromatic hydroxyamine, an aromatic diamine, an ester derivative thereof, and an amide derivative thereof.

Examples of aromatic hydroxycarboxylic acids serving as the aforementioned component (I) include aromatic hydroxycarboxylic acids such as 4-hydroxybenzoic acid, 3-hydroxybenzoic acid, 6-hydroxy-2-naphthoic acid, and 6-hydroxy-1-naphthoic acid; alkyl-substituted aromatic hydroxycarboxylic acids such as 3-methyl-4-hydroxybenzoic acid, 3,5-dimethyl-4-hydroxybenzoic acid, 2,6-dimethyl-4-hydroxybenzoic acid, and 6-hydroxy-5-methyl-2-naphthoic acid; alkoxy-substituted aromatic hydroxycarboxylic acids such as 3-methoxy-4-hydroxybenzoic acid, 3,5-dimethoxy-4-hydroxybenzoic acid, and 6-hydroxy-5-methoxy-2-naphthoic acid; and halo-substituted aromatic hydroxycarboxylic acids such as 3-chloro-4-hydroxybenzoic acid, 2-chloro-4-hydroxybenzoic acid, 2,3-dichloro-4-hydroxybenzoic acid, 3,5-dichloro-4-hydroxybenzoic acid, 2,5-dichloro-4-hydroxybenzoic acid, 3-bromo-4-hydroxybenzoic acid, 6-hydroxy-5-chloro-2-naphthoic acid, 6-hydroxy-7-chloro-2-naphthoic acid, 6-hydroxy-5,7-dichloro-2-naphthoic acid.

Examples of ester derivatives of these aromatic hydroxycarboxylic acids include acyl derivatives such as acetyl derivatives and propionyl derivatives.

Examples of aromatic dicarboxylic acids serving as the aforementioned component (II) include aromatic dicarboxylic acids such as terephthalic acid, 4,4'-diphenyldicarboxylic acid, 4,4'-triphenyldicarboxylic acid, 2,6-naphthalenedicarboxylic acid, diphenyl ether-4,4'-dicarboxylic acid, diphenoxyethane-4,4'-dicarboxylic acid, diphenoxybutane-4,4'-dicarboxylic acid, diphenylethane-4,4'-dicarboxylic acid, isophthalic acid, diphenyl ether-3,3'-dicarboxylic acid, diphenoxyethane-3,3'-dicarboxylic acid, diphenoxybutane-3,3'-dicarboxylic acid, diphenylethane-3,3'-dicarboxylic acid, and naphthalene-2,6-dicarboxylic acid; halo-substituted compounds of the above aromatic dicarboxylic acids such as chloroterephthalic acid, dichloroterephthalic acid, and bromoterephthalic acid; alkyl-substituted compounds of the above aromatic dicarboxylic acids such as methylterephthalic acid, dimethylterephthalic acid, and ethylterephthalic acid; and alkoxy-substituted compounds of the above aromatic dicarboxylic acids such as methoxyterephthalic acid and ethoxyterephthalic acid.

Examples of alicyclic dicarboxylic acids serving as the aforementioned component (II) include alicyclic dicarboxylic acids such as trans-1,4-cyclohexanedicarboxylic acid, cis-1,4-cyclohexanedicarboxylic acid, and 1,3-cyclohexanedicarboxylic acid; and alkyl-, alkoxy-, or halo-substituted compounds of the above alicyclic dicarboxylic acids such as trans-1,4-(1-methyl)cyclohexanedicarboxylic acid and trans-1,4-(1-chloro)cyclohexanedicarboxylic acid.

Examples of aromatic diols serving as the aforementioned component (III) include aromatic diols such as hydroquinone, resorin, 4,4'-dihydroxydiphenyl, 4,4'-dihydroxytriphenyl, 2,6-naphthalenediol, 4,4'-dihydroxydiphenyl ether, bis(4-hydroxyphenoxy)ethane, 3,3'-dihydroxydiphenyl, 3,3'-dihydroxydiphenyl ether, 1,4-, 1,5-, or 2,6-naphthalenediol, 2,2-bis(4-hydroxyphenyl)propane, and 2,2-bis(4-hydroxyphenyl)methane; and alkyl-, alkoxy-, or halo-substituted compounds of the above aromatic diols such as chlorohydroquinone, methylhydroquinone, butylhydroquione, phenylhydroquinone, methoxyhydroquinone, phenoxyhydroquinone, 4-chlororesorcin, and 4-methylresorcin.

Examples of alicyclic diols serving as the aforementioned component (III) include alicyclic diols such as trans-1,4-cyclohexanediol, cis-1,4-cyclohexanediol, trans-1,4-cyclohexanedimethanol, cis-1,4-cyclohexanedimethanol, trans-1,3-cyclohexanediol, cis-1,2-cyclohexanediol, and trans-1,3-cyclohexanedimethanol; and alkyl-, alkoxy-, or halo-substituted compounds of the above alicyclic diols.

Examples of aliphatic diols serving as the aforementioned component (III) include linear-chain or branched aliphatic diols such as ethylene glycol, 1,3-propanediol, 1,4-butanediol, and neopentyl glycol.

Examples of ester derivatives of these aromatic, alicyclic, or aliphatic diols include ester derivatives such as acetyl derivatives and propionyl derivatives.

Examples of aromatic hydroxyamines and aromatic diamines serving as the aforementioned component (IV) include 4-aminophenol, 4-acetamidophenol, 1,4-phenylenediamine, N-methyl-1,4-phenylenediamine, N,N'-dimethyl-1,4-phenylenediamine, 3-aminophenol, 3-methyl-4-aminophenol, 2-chloro-4-aminophenol, 4-amino-1-naphthol, 4-amino-4'-hydroxydiphenyl, 4-amino-4'-hydroxydiphenyl ether, 4-amino-4'-hydroxydiphenylmethane, 4-amino-4'-hydroxydiphenyl sulfide, 4,4'-diaminophenyl sulfide (also called thiodianiline), 4,4'-diaminodiphenyl sulfone, 2,5-diaminotoluene, 4,4'-ethylenedianiline, 4,4'-diaminodiphenoxyethane, 4,4'-diaminodiphenylmethane (also called methylenedianiline), and 4,4'-diaminodiphenyl ether (also called oxydianiline).

Examples of ester derivatives and/or amide derivatives of these aromatic hydroxyamines and aromatic diamines include acetyl derivatives and propionyl derivatives.

In the present invention, an acylating agent is employed. Examples of acylating agents include acid anhydrides such as acetic anhydride and acid chlorides.

Acylation may be carried out in the presence of the below-described catalysts.

In the present invention, polymerization is carried out in the presence or absence of a polymerization catalyst.

Examples of polymerization catalysts include dialkyltin oxides, diaryltin oxides, titanium dioxide, alkoxytitaniums, silicate salts, titanium alcoholates, alkali metal carboxylate salts or alkaline earth metal carboxylate salts, and Lewis acids such as boron trifluoride ($BF_3$)

When the liquid crystalline polymer of the invention is produced from the aforementioned starting monomers, acylating agent, and catalyst, it is important that these components are charged so as to satisfy the following equations (1) to (4) :

$$0.0015 \leq ((A) - (B))/((A) + (B)) \leq 0.006 \qquad (1);$$

$$1.01 \leq (D)/(C) \leq 1.08 \qquad (2);$$

$$0 \leq (E) \leq 40 \qquad (3);$$

and

$$(D)/(C) \geq -0.002^{\times}(E) + 1.04 \qquad (4),$$

wherein

(A) denotes the total amount by equivalent (with respect to a carboxyl group) of starting monomers I and/or II;
(B) denotes the total amount by equivalent (with respect to a hydroxyl group, an amino group, an ester derivative group thereof, and an amide derivative group thereof) of starting monomers I, III, and/or IV;
(C) denotes the total amount by equivalent (with respect to a hydroxyl group and an amino group) of starting monomers I, III, and/or IV;
(D) denotes the amount by equivalent of an acylating agent; and

(E) denotes the amount of a catalyst (as reduced to amount by weight of metal, unit: ppm).

When ((A) - (B))/((A) + (B)) is less than 0.0015, production yield of the polymer decreases, whereas when the ratio is in excess of 0.006, a long period of polymerization time is required, thereby causing discoloration of the produced polymer due to heat deterioration.

When (D)/(C) is less than 1.01, starting monomers are not sufficiently acylated, thereby extending the polymerization time. Thus, the produced polymer is readily discolored due to heat deterioration and the amount of evolved gases increases.

In contrast, when (D)/(C) is in excess of 1.08, discoloration of the polymer due to heat deterioration is promoted by the acylating agent.

The amount (E) of the catalyst is defined by the total amount of metal components contained in an employed catalyst and is based on ppm by weight to total amounts of the starting monomers.

When (E) is in excess of 40 ppm, gas evolution predominates.

Even though (D)/(C) falls within the aforementioned range represented by equation (2), (D)/(C) must satisfy the aforementioned equation (4), since (D)/(C) is also closely related to the amount (E) of catalyst.

When (D)/(C) is less than the value calculated from equation (4), starting monomers are not sufficiently acylated, thereby extending the polymerization time. Thus, the produced polymer is readily discolored due to heat deterioration, thereby failing to attain the aforementioned object of the present invention.

Some polymers produced from the aforementioned components do not form an anisotropic melt phase depending on the compositional proportions of the components in the polymer or on distribution of a monomer sequence. However, the liquid crystalline polymers according to the present invention are limited to thermotropic liquid crystalline polymers which form an anisotropic melt phase.

The liquid crystalline polymer of the present invention is produced through polymerization such as direct polymerization or transesterification. Examples of polymerization methods include melt polymerization, solution polymerization, and slurry polymerization.

The polymer which is produced through any one of these polymerization methods may further be subjected to solid state polymerization by heating under reduced pressure or in an inert gas, so as to elevate the molecular weight.

In order to carry out solution polymerization or slurry polymerization, a solvent such as liquid paraffin, high-heat-resistant synthetic oil, or inert mineral oil is employed.

Polymerization is carried out under conditions, i.e., reaction temperature of 200-370°C and a terminal pressure of 1-760 Torr (133-101,300 Pa).

Particularly, melt polymerization is carried out at a reaction temperature of 260-370°C and a terminal pressure of 1-100 Torr (133-13,300 Pa), preferably at 300-360°C and 1-50 Torr (133-6,670 Pa).

Solid state polymerization, which is carried out in order to elevate the molecular weight after completion of melt polymerization, is carried out at a reaction temperature of 230-350°C, preferably 260-330°C, and a terminal pressure of 10-760 Torr (1,330-101,300 Pa), preferably under inert gas flow at atmospheric pressure.

Polymerization may be carried out in a one-step manner, i.e., all starting monomers, an acylating agent and a catalyst are placed into the same reactor, and the reaction is initiated. Alternatively, polymerization may be carried out in a two-step manner, i.e., hydroxyl groups and amino groups of starting monomers I, III, and/or IV are acylated in advance with an acylating agent, then the acylated product is caused to react with carboxyl groups in monomer II.

After the temperature of the reaction system reaches a predetermined temperature, the system is evacuated to control the inside pressure to a predetermined reduced pressure. Under such conditions, melt polymerization is carried out. When the torque of an agitator disposed in a reactor reaches a predetermined value, an inert gas is introduced into the reactor so as to convert reduced pressure conditions to pressurized conditions via atmospheric pressure, thereby discharging the resultant polymer from a bottom portion of the reactor.

EXAMPLES

The present invention will next be described in more detail by way of examples, which should not be construed as limiting the invention thereto.

Example 1

To a polymerization reactor equipped with agitation paddles, a reflux column, a monomer-introducing inlet, a nitrogen conduit, and an evacuation/purge line, the following starting monomers, polymerization catalyst, and acylating agent were placed, and the atmosphere in the reactor was substituted by nitrogen:

| 4-hydroxybenzoic acid: | 1444 g |
|---|---|
| 2-hydroxy-6-naphthoic acid: | 316 g |
| terephthalic acid: | 550 g |
| 4,4'-dihydroxydiphenyl: | 426 g |
| 4-acetamidophenol: | 141 g |
| potassium acetate (catalyst) | 188 mg |
| (30 ppm by weight as reduced to metallic K, to the total amount of the monomers) | |
| acetic anhydride | 1873 g |
| (equivalent ratio of 1.04 to the sum of hydroxyl groups and amino groups). | |

In the above formulation, terephthalic acid was added in excess by 0.5 mol% to the sum of 4,4'-dihydroxydiphenyl and 4-acetamidophenol.

After starting materials had been charged to the reactor, the reaction system was heated to 140°C, and the mixture was allowed to react at 140°C for 3 hours. Subsequently, the temperature was elevated to 340°C over approximately four hours, and then the pressure was lowered to 5 Torr (667 Pa) over 30 minutes, thereby carrying out melt polymerization while acetic acid, excessive acetic anhydride, and other low-boiling components were removed through distillation. After the torque of the agitator reached a predetermined value, nitrogen was introduced into the reactor so as to convert reduced pressure conditions to pressurized conditions via atmospheric pressure, thereby discharging the resultant polymer from a bottom portion of the reactor.

The yield of the discharged polymer was as high as 94.2 wt.% based on the theoretical yield calculated from the amounts of starting monomers.

The thus-obtained thermotropic liquid crystalline polymer (70 wt.%) and glass fiber (30 wt.%) were blended, and the mixture was kneaded by means of a biaxial extruder, to thereby prepare pellets of a thermotropic liquid crystalline polymer composition.

By means of a Curie-point-head-space/gas chromatograph, the pellets were heated at 320°C for 10 minutes, and the gas evolved from the pellets was subjected to quantitative determination. The analysis revealed that the gas comprised HBA (24 ppm), HBA-Ph (5 ppm), and PhOH (10 ppm). The amount of evolved gas was smaller than that of gas evolved from a conventional thermotropic liquid crystalline polymer composition. Thus, a high-quality thermotropic liquid crystalline polymer composition was obtained.

Comparative Example 1-1

The procedure of Example 1 was repeated, except that the following starting materials were placed, to thereby produce and discharge a polymer:

| 4-hydroxybenzoic acid: | 1442 g |
|---|---|
| 2-hydroxy-6-naphthoic acid: | 316 g |
| terephthalic acid: | 542 g |
| 4,4'-dihydroxydiphenyl: | 434 g |
| 4-acetamidophenol: | 141 g |
| potassium acetate (catalyst) | 188 mg |
| (30 ppm by weight as reduced to metallic K, to the total amount of the monomers) | |
| acetic anhydride | 1881 g |
| (equivalent ratio of 1.04 to the sum of hydroxyl groups and amino groups). | |

In the above formulation, terephthalic acid was added in an equimol amount to the sum of 4,4'-dihydroxydiphenyl and 4-acetamidophenol.

The yield of the discharged polymer was as low as 93.4 wt.% based on the theoretical yield calculated from the amounts of starting monomers.

By employing a compositional ratio similar to that employed in Example 1, pellets of a thermotropic liquid crystalline polymer composition were prepared from the thus-obtained thermotropic liquid crystalline polymer. The gas evolved from the pellets was subjected to quantitative determination under the conditions similar to those employed in Example 1. The analysis revealed that the gas comprised HBA (35 ppm), HBA-Ph (6 ppm), and PhOH (19 ppm). The amount of evolved gas was relatively large and the obtained thermotropic liquid crystalline polymer composition was of low quality.

Comparative Example 1-2

The procedure of Example 1 was repeated, except that the following starting materials were placed, to thereby produce and discharge a polymer:

| | |
|---|---|
| 4-hydroxybenzoic acid: | 1446 g |
| 2-hydroxy-6-naphthoic acid: | 317 g |
| terephthalic acid: | 562 g |
| 4,4'-dihydroxydiphenyl: | 414 g |
| 4-acetamidophenol: | 141 g |
| potassium acetate (catalyst) | 188 mg |
| (30 ppm by weight as reduced to metallic K, to the total amount of the monomers) | |
| acetic anhydride | 1861 g |
| (equivalent ratio of 1.04 to the sum of hydroxyl groups and amino groups). | |

In the above formulation, terephthalic acid was added in excess by 1.2 mol% to the sum of 4,4'-dihydroxydiphenyl and 4-acetamidophenol.
In Comparative Example 1-2, polymerization rate was considerably low, and a long period of time was required to attain a predetermined value of the torque of the agitator as compared with Example 1. The thus-produced and discharged polymer assumed black-blown.

Example 2

The procedure of Example 1 was repeated, except that the following starting materials were placed, to thereby produce and discharge a polymer:

| | |
|---|---|
| 4-hydroxybenzoic acid: | 1444 g |
| 2-hydroxy-6-naphthoic acid: | 316 g |
| terephthalic acid: | 550 g |
| 4,4'-dihydroxydiphenyl: | 426 g |
| 4-acetamidophenol: | 141 g |
| potassium acetate (catalyst) | none |
| acetic anhydride (equivalent ratio of 1.07 to the sum of hydroxyl groups and amino groups). | 1927 g |

In the above formulation, terephthalic acid was added in excess by 0.5 mol% to the sum of 4,4'-dihydroxydiphenyl and 4-acetamidophenol.
The yield of the discharged polymer was as high as 94.4 wt.% based on the theoretical yield calculated from the amounts of starting monomers.
By employing a compositional ratio similar to that employed in Example 1, pellets of a thermotropic liquid crystalline polymer composition were prepared from the thus-obtained thermotropic liquid crystalline polymer. The gas evolved from the pellets was subjected to quantitative determination under the conditions similar to those employed in Example 1. The analysis revealed that the gas comprised HBA (22 ppm), HBA-Ph (4 ppm), and PhOH (9 ppm). The amount of evolved gas was relatively small. Thus, a high-quality thermotropic liquid crystalline polymer composition was obtained.

Comparative Example 2-1

The procedure of Example 1 was repeated, except that the following starting materials were placed, to thereby produce and discharge a polymer:

| | |
|---|---|
| 4-hydroxybenzoic acid: | 1444 g |
| 2-hydroxy-6-naphthoic acid: | 316 g |
| terephthalic acid: | 550 g |
| 4,4'-dihydroxydiphenyl: | 426 g |
| 4-acetamidophenol: | 141 g |

(continued)

| potassium acetate (catalyst)<br>(60 ppm by weight as reduced to metallic K, to the total amount of the monomers) | 375 mg |
| acetic anhydride<br>(equivalent ratio of 1.01 to the sum of hydroxyl groups and amino groups). | 1819 g |

In the above formulation, terephthalic acid was added in excess by 0.5 mol% to the sum of 4,4'-dihydroxydiphenyl and 4-acetamidophenol.

Since the catalyst was added in an excessive amount, the yield of the discharged polymer was as low as 92.6 wt.% based on the theoretical yield calculated from the amounts of starting monomers.

By employing a compositional ratio similar to that employed in Example 1, pellets of a thermotropic liquid crystalline polymer composition were prepared from the thus-obtained thermotropic liquid crystalline polymer. The gas evolved from the pellets was subjected to quantitative determination under the conditions similar to those employed in Example 1. The analysis revealed that the gas comprised HBA (69 ppm), HBA-Ph (16 ppm), and PhOH (23 ppm). The amount of evolved gas was relatively large and the obtained thermotropic liquid crystalline polymer composition was of low quality.

Comparative Example 2-2

The procedure of Example 1 was repeated, except that the following starting materials were placed, to thereby produce and discharge a polymer:

| 4-hydroxybenzoic acid: | 1444 g |
| 2-hydroxy-6-naphthoic acid: | 316 g |
| terephthalic acid: | 550 g |
| 4,4'-dihydroxydiphenyl: | 426 g |
| 4-acetamidophenol: | 141 g |
| potassium acetate (catalyst) | none |
| acetic anhydride<br>(equivalent ratio of 1.01 to the sum of hydroxyl groups and amino groups). | 1819 g |

In the above formulation, terephthalic acid was added in excess by 0.5 mol% to the sum of 4,4'-dihydroxydiphenyl and 4-acetamidophenol.

In Comparative Example 2-2, polymerization rate was considerably low due to insufficient acylation of starting monomers, and the torque of the agitator did not finally reach a predetermined value. The thus-produced and discharged polymer had a very low viscosity and assumed black-blown.

Example 3

The procedure of Example 1 was repeated, except that the following starting materials were placed, to thereby produce and discharge a polymer:

| 4-hydroxybenzoic acid: | 1443 g |
| 2-hydroxy-6-naphthoic acid: | 316 g |
| terephthalic acid: | 546 g |
| 4,4'-dihydroxydiphenyl: | 430 g |
| 4-acetamidophenol: | 141 g |
| catalyst | none |
| acetic anhydride<br>(equivalent ratio of 1.07 to the sum of hydroxyl groups and amino groups). | 1931 g |

In the above formulation, terephthalic acid was added in excess by 0.25 mol% to the sum of 4,4'-dihydroxydiphenyl and 4-acetamidophenol.

The yield of the discharged polymer was as high as 94.8 wt.% based on the theoretical yield calculated from the amounts of starting monomers.

By employing a compositional ratio similar to that employed in Example 1, pellets of a thermotropic liquid crystalline polymer composition were prepared from the thus-obtained thermotropic liquid crystalline polymer. The gas evolved from the pellets was subjected to quantitative determination under the conditions similar to those employed in Example 1. The analysis revealed that the gas comprised HBA (25 ppm), HBA-Ph (4 ppm), and PhOH (15 ppm). The amount of evolved gas was relatively small. Thus, a high-quality thermotropic liquid crystalline polymer composition was obtained.

Comparative Example 3

The procedure of Example 1 was repeated, except that the following starting materials were placed, to thereby produce and discharge a polymer:

| | |
|---|---|
| 4-hydroxybenzoic acid: | 1443 g |
| 2-hydroxy-6-naphthoic acid: | 316 g |
| terephthalic acid: | 546 g |
| 4,4'-dihydroxydiphenyl: | 430 g |
| 4-acetamidophenol: | 141 g |
| potassium acetate (catalyst) | 375 mg |
| (60 ppm by weight as reduced to metallic K, to the total amount of the monomers) | |
| acetic anhydride | 1823 g |
| (equivalent ratio of 1.01 to the sum of hydroxyl groups and amino groups). | |

In the above formulation, terephthalic acid was added in excess by 0.25 mol% to the sum of 4,4'-dihydroxydiphenyl and 4-acetamidophenol.

The yield of the discharged polymer was as low as 91.6 wt.% based on the theoretical yield calculated from the amounts of starting monomers.

By employing a compositional ratio similar to that employed in Example 1, pellets of a thermotropic liquid crystalline polymer composition were prepared from the thus-obtained thermotropic liquid crystalline polymer. The gas evolved from the pellets was subjected to quantitative determination under the conditions similar to those employed in Example 1. The analysis revealed that the gas comprised HBA (78 ppm), HBA-Ph (40 ppm), and PhOH (37 ppm). The amount of evolved gas was relatively large and the obtained thermotropic liquid crystalline polymer composition was of low quality.

Example 4

To a polymerization reactor equipped with agitation paddles, a reflux column, a monomer-introducing inlet, a nitrogen conduit, and an evacuation/purge line, the following starting monomers, polymerization catalyst, and acylating agent were placed, and the atmosphere of the reactor was substituted by nitrogen:

| | |
|---|---|
| 4-hydroxybenzoic acid: | 1444 g |
| 2-hydroxy-6-naphthoic acid: | 316 g |
| 4,4'-dihydroxydiphenyl: | 426 g |
| 4-acetamidophenol: | 141 g |
| catalyst | none |
| acetic anhydride (equivalent ratio of 1.07 to the sum of hydroxyl groups and amino groups). | 1927 g |

After starting materials had been charged to the reactor, the reaction system was heated to 140°C, and the mixture was allowed to react at 140°C for 3 hours. Subsequently, terephthalic acid (550 g) was added to the reaction mixture, and the resultant mixture was heated to 340°C over approximately four hours, and then the pressure was lowered to 5 Torr (667 Pa) over 30 minutes, thereby carrying out melt polymerization while acetic acid, excessive acetic anhydride, and other low-boiling components were removed through distillation. After the torque of the agitator reached a predetermined value, nitrogen was introduced into the reactor so as to convert reduced pressure conditions to pressurized conditions via atmospheric pressure, thereby discharging the resultant polymer from a bottom portion of the reactor.

The yield of the discharged polymer was as high as 94.5 wt.% based on the theoretical yield calculated from the amounts of starting monomers.

The thus-obtained thermotropic liquid crystalline polymer (70 wt.%) and glass fiber (30 wt.%) were blended, and the mixture was kneaded by means of a biaxial extruder, to thereby prepare pellets of a thermotropic liquid crystalline polymer composition.

By means of a Curie-point-head-space/gas chromatograph, the pellets were heated at 320°C for 10 minutes, and the gas evolved from the pellets was subjected to quantitative determination. The analysis revealed that the gas comprised HBA (23 ppm), HBA-Ph (5 ppm), and PhOH (11 ppm). The amount of evolved gas was smaller than that of gas evolved from a conventional thermotropic liquid crystalline polymer composition. Thus, a high-quality thermotropic liquid crystalline polymer composition was obtained.

The results of Examples and Comparative Examples are shown in Table 1.

Table 1

| | $\dfrac{(A)-(B)}{(A)+(B)}$ | (D)/(C) | (E) (ppm) | Yield (%) | Gas components (ppm) | | | Discoloration |
| --- | --- | --- | --- | --- | --- | --- | --- | --- |
| | | | | | HBA | HBA-Ph | PhOH | |
| Ex. 1 | 0.005 | 1.04 | 30 | 94.2 | 24 | 5 | 10 | no |
| Ex. 2 | 0.005 | 1.07 | 0 | 94.4 | 22 | 4 | 9 | no |
| Ex. 3 | 0.0025 | 1.07 | 0 | 94.8 | 25 | 4 | 15 | no |
| Ex. 4 | 0.005 | 1.07 | 0 | 94.5 | 23 | 5 | 11 | no |
| Comp. Ex. 1-1 | 0 | 1.04 | 30 | 93.4 | 35 | 6 | 19 | no |
| Comp. Ex. 1-2 | 0.012 | 1.04 | 30 | — | | | | black-brown |
| Comp. Ex. 2-1 | 0.005 | 1.01 | 60 | 92.6 | 69 | 16 | 23 | no |
| Comp. Ex. 2-2 | 0.005 | 1.01 | 0 | — | | | | black-brown |
| Comp. Ex. 3 | 0.0025 | 1.01 | 60 | 91.6 | 78 | 40 | 37 | no |

As described hereinabove, the present invention can provide a method for producing a high-quality thermotropic liquid crystalline polymer at high yield including the recovery ratio of the polymer from a reactor, which method prevents evolution of low-boiling gases and discoloration due to heat deterioration.

**Claims**

1. A method for producing a thermotropic liquid crystalline polymer, which method comprises polymerizing starting monomers in the presence of an acylating agent,
   said starting monomers comprising a carboxyl group-containing compound, a hydroxyl group-containing compound, an amino group-containing compound, an ester derivative thereof, and/or an amide derivative thereof, which are selected from the group consisting of compounds represented by the following components I, II, III, and IV:

   (I) an aromatic hydroxycarboxylic acid and an ester derivative thereof;
   (II) an aromatic dicarboxylic acid and an alicyclic dicarboxylic acid;
   (III) an aromatic diol, an alicyclic diol, an aliphatic diol, and an ester derivative thereof; and
   (IV) an aromatic hydroxyamine, an aromatic diamine, an ester derivative thereof, and an amide derivative thereof,

   wherein the starting monomers, the acylating agent, and a catalyst are charged so as to satisfy the following equations (1) to (4):

$$0.0015 \leq ((A) - (B))/((A) + (B)) \leq 0.006 \qquad (1);$$

$$1.01 \leq (D)/(C) \leq 1.08 \qquad (2);$$

$$0 \leq (E) \leq 40 \qquad (3);$$

   and

$$(D)/(C) \geq -0.002^{\times}(E) + 1.04 \qquad (4),$$

   wherein

   (A) denotes the total amount by equivalent (with respect to a carboxyl group) of starting monomers I and/or II;
   (B) denotes the total amount by equivalent (with respect to a hydroxyl group, an amino group, an ester derivative group thereof, and an amide derivative group thereof) of starting monomers I, III, and/or IV;
   (C) denotes the total amount by equivalent (with respect to a hydroxyl group and an amino group) of starting monomers I, III, and/or IV;
   (D) denotes the amount by equivalent of an acylating agent; and
   (E) denotes the amount of a catalyst (as reduced to amount by weight of metal, unit: ppm).

2. A method for producing a thermotropic liquid crystalline polymer according to claim 1, all of the starting monomers I, II, III, and IV are aromatic compounds.

3. A method for producing a thermotropic liquid crystalline polymer according to claim 1, all of the starting monomers, the acylating agent, and the catalyst are charged into the same reactor, and the resultant mixture is caused to react.

4. A method for producing a thermotropic liquid crystalline polymer according to claim 1, hydroxyl groups and/or amino groups of the starting monomers I, III, and/or IV are acylated by the acylating agent, and subsequently, the acylated product is caused to react with the starting monomer II.

**Patentansprüche**

1. Verfahren zur Herstellung eines thermotropen flüssigkristallinen Polymers, wobei das Verfahren die Polymerisation von Ausgangsmonomeren in Gegenwart eines Acylierungsmittels umfasst, wobei die Ausgangsmonomere eine Carboxylgruppen enthaltende Verbindung, eine Hydroxylgruppen enthaltende Verbindung, eine Aminogruppen enthaltende Verbindung, ein Esterderivat davon und/oder ein Amidderivat davon umfassen, die aus der aus Verbindungen bestehenden Gruppe ausgewählt sind, die durch die folgenden Komponenten I, II, III und IV veranschaulicht sind:

   (I) eine aromatische Hydroxycarbonsäure und ein Esterderivat davon,

   (II) eine aromatische Dicarbonsäure und eine alicyclische Dicarbonsäure,

   (III) ein aromatisches Diol, ein alicyclisches Diol, ein aliphatisches Diol und ein Esterderivat davon, und

   (IV) ein aromatisches Hydroxylamin, ein aromatisches Diamin, ein Esterderivat davon und ein Amidderivat davon,

   wobei die Ausgangsmonomere, das Acylierungsmittel und ein Katalysator zugegeben werden, sodass die folgenden Gleichungen (1) bis (4) erfüllt sind:

$$0{,}0015 \leq ((A) - (B))/((A) + (B)) \leq 0{,}006 \tag{1}$$

$$1{,}01 \leq (D)/(C) \leq 1{,}08 \tag{2}$$

$$0 \leq (E) \leq 40 \tag{3}$$

   und

$$(D)/(C) \geq -0{,}002 \times (E) + 1{,}04 \tag{4}$$

   wobei

   (A) die Gesamtmenge in Äquivalenten (bezogen auf eine Carboxylgruppe) eines Ausgangsmonomers I und/oder II darstellt,

   (B) die Gesamtmenge in Äquivalenten (bezogen auf eine Hydroxylgruppe, eine Aminogruppe, eine Esterderivatgruppe davon und eine Amidderivatgruppe davon) der Ausgangsmonomere I, III und/oder IV darstellt,

   (C) die Gesamtmenge in Äquivalenten (bezogen auf eine Hydroxylgruppe und eine Aminogruppe) der Ausgangsmonomere I, III und/oder IV darstellt,

   (D) die Gesamtmenge in Äquivalenten eines Acylierungsmittels darstellt und

   (E) die Menge eines Katalysators (reduziert auf die Metallmenge, bezogen auf das Gewicht, Einheit: ppm) darstellt.

2. Verfahren zur Herstellung eines thermotropen flüssigkristallinen Polymers nach Anspruch 1, wobei alle Ausgangsmonomere I, II, III und IV aromatische Verbindungen sind.

3. Verfahren zur Herstellung eines thermotropen flüssigkristallinen Polymers nach Anspruch 1, wobei alle Ausgangsmonomere, das Acylierungsmittel und der Katalysator in denselben Reaktor gegeben werden und die Umsetzung der resultierenden Mischung bewirkt wird.

**4.** Verfahren zur Herstellung eines thermotropen flüssigkristallinen Polymers nach Anspruch 1, wobei die Hydroxylgruppe und/oder Aminogruppen der Ausgangsmonomere I, III und/oder IV durch das Acylierungsmittel acyliert werden und anschließend eine Umsetzung des acylierten Produkts mit dem Ausgangsmonomer II bewirkt wird.

## Revendications

**1.** Procédé pour préparer un polymère cristallin liquide thermotropique, ce procédé comprenant la polymérisation de monomères de départ en présence d'un agent acylant,

lesdits monomères de départ comprenant un composé contenant un groupe carboxyle, un composé contenant un groupe hydroxyle, un composé contenant un groupe amino, un dérivé ester de ceux-ci, et/ou un dérivé amidé de ceux-ci, qui sont choisis dans le groupe constitué par les composés représentés par les constituants I, II, III et IV suivants :

(I) un acide hydroxycarboxylique aromatique et un dérivé ester de celui-ci ;
(II) un acide dicarboxylique aromatique et un acide dicarboxylique alicyclique ;
(III) un diol aromatique, un diol alicyclique, un diol aliphatique, et un dérivé ester de ceux-ci ; et
(IV) une hydroxyamine aromatique, une diamine aromatique, un dérivé ester de celles-ci, et un dérivé amidé de celles-ci,

dans lequel les monomères de départ, l'agent acylant et un catalyseur sont introduits de façon à satisfaire aux équations (1) à (4) suivantes :

$$0,0015 \leq ((A) - (B))/((A) + (B)) \leq 0,006 \qquad (1);$$

$$1,01 \leq (D)/(C) \leq 1,08 \qquad (2);$$

$$0 \leq (E) \leq 40 \qquad (3);$$

et

$$(D)/(C) \geq -0,002 \times (E) + 1,04 \qquad (4),$$

où

(A) représente la quantité totale par équivalent (par rapport à un groupe carboxyle) de monomères de départ I et/ou II ;
(B) représente la quantité totale par équivalent (par rapport à un groupe hydroxyle, un groupe amino, un groupe dérivé ester de ceux-ci, et un groupe dérivé amidé de ceux-ci) de monomères de départ I, III et/ou IV ;
(C) représente la quantité totale par équivalent (par rapport à un groupe hydroxyle et un groupe amino) de monomères de départ I, III et/ou IV ;
(D) représente la quantité par équivalent d'un agent acylant ; et
(E) représente la quantité d'un catalyseur (réduite à une quantité en poids de métal, unité : ppm).

**2.** Procédé pour préparer un polymère cristallin liquide thermotropique selon la revendication 1, tous les monomères de départ I, II, III et IV étant des composés aromatiques.

**3.** Procédé pour préparer un polymère cristallin liquide thermotropique selon la revendication 1, tous les monomères de départ, l'agent acylant et le catalyseur étant introduits dans le même réacteur, et le mélange obtenu étant mis à réagir.

**4.** Procédé pour préparer un polymère cristallin liquide thermotropique selon la revendication 1, les groupes hydroxyles et/ou les groupes amino des monomères de départ I, III et/ou IV étant acylés par l'agent acylant, après quoi le produit acylé est mis à réagir avec le monomère de départ II.